# EUROPÄISCHE PATENTSCHRIFT

(11) **EP 3 082 195 B1**
(45) Veröffentlichungstag und Bekanntmachung des Hinweises auf die Patenterteilung: **14.07.2021**
(21) Anmeldenummer: 16161803.8
(22) Anmeldetag: 23.03.2016
(51) Int. Cl.: H01R 4/48, H01R 4/64, H01R 11/03, H02G 3/32

(54) **SCHRAUBENLOSE KLEMMVORRICHTUNG FÜR ELEKTRISCHE LEITER**
SCREWLESS CLAMPING DEVICE FOR ELECTRIC CONDUCTORS
DISPOSITIF DE SERRAGE SANS VIS POUR CONDUCTEUR ELECTRIQUE

(30) Priorität: 13.04.2015 DE 102015004660; 06.08.2015 DE 102015010312
(43) Veröffentlichungstag der Anmeldung: 19.10.2016
(60) Teilanmeldung: 18182348.5
(73) Patentinhaber: DEHN SE + Co KG, 92318 Neumarkt / Opf. (DE)
(72) Erfinder: Schrollinger, Andreas, 92355 Velburg (DE); Braun, Christian, 92318 Neumarkt (DE); Seger, Siegfried, 92364 Deining (DE)
(74) Vertreter: Isarpatent

(56) Entgegenhaltungen:
- WO-A1-2012/007518
- DE-A1-102007 005 964
- FR-A1- 2 337 443
- US-A- 5 024 610
- US-A1- 2002 193 018
- US-A1- 2005 109 887

## Beschreibung

Die Erfindung betrifft eine schraubenlose Klemmvorrichtung für Blitzschutz- oder Erdungsleiter mit gleicher oder unterschiedlicher Querschnittsfläche gemäß Oberbegriff des Anspruchs 1.

Aus der DE 299 06 078 U1 ist ein schraubenloser Halter für elektrische Leiter vorbekannt. Der schraubenlose Halter soll insbesondere für Leiter mit einem kreisrunden Querschnitt, insbesondere Blitzableiter, Verwendung finden, wobei ein Auflageteil vorgesehen ist, an dem sich der eingelegte Leiter abstützt, und mit vom Auflageteil abragenden federnden Krallen, deren freie Enden zum Auflageteil gerichtet sind und ein Widerlager für den eingelegten Leiter bilden.

Um eine axial unverschiebliche oder axial verschiebliche Anordnung des Leiters im Halter zu erreichen, sind vier Krallen kreuzweise zueinander angeordnet, die zwischen sich zwei einander kreuzende Einlage- oder Eindrückbereiche für einen Leiter begrenzen, wobei einer der Einlage- oder Eindrückbereiche so auf einen Leiterdurchmesser abgestimmt ist, dass der eingelegte Leiter axial unverschieblich von den Krallen gehalten ist. Der weitere Einlage- oder Eindrückbereich ist hingegen so auf den Durchmesser des Leiters abgestimmt, dass der eingelegte Leiter axial verschieblich gehalten werden kann. Vorzugsweise ist vorgesehen, dass jede Kralle einen etwa orthogonal vom Auflageteil abragenden Flachsteg und einen V-förmig zum Auflageteil abgewinkelten flachen Haltesteg aufweist. Bevorzugt ist darüber hinaus, dass jeweils zwei Krallen an einander gegenüberliegenden Rändern des Auflageteils angeordnet sind, wobei zwischen den jeweils benachbarten Krallen ein Einführspalt zu dem Leiter entsteht. Der Einführspalt zwischen den Krallen, insbesondere zwischen den vom Auflageteil abragenden Flachstegen oder Krallen ist um einen geringen Betrag größer als der Durchmesser des einzudrückenden Leiters. Jede Kralle weist an diesem dem eingelegten Leiter zugewandten Ende eine Kante auf, wobei eine Ecke der Kante von der Leiter-Auflagefläche des Auflageteils einen Abstand aufweist, der kleiner als der Leiterdurchmesser ist. Die weitere Ecke der Kante weist von der Leiter-Auflagefläche des Auflageteils einen Abstand auf, der gleich dem Leiterdurchmesser oder größer als der Leiterdurchmesser gewählt wird.

Bei einer Ausführungsform ist das Auflageteil samt Krallen einstückig als Blech-Stanz-Biegeteil ausgebildet und es besteht die Möglichkeit der Ausbildung einer auf den Halter samt eingelegtem Leiter aufsteckbaren, die Krallen abdeckende Schutzkappe, welche topfartig ausgebildet ist und am Auflageteil oder anderen Krallen verrastet werden kann. Die Schutzkappe kann diesbezüglich auch als Kennzeichnungsträger ausgebildet sein.

Die vorbekannte Lösung ermöglicht zwar das Halten und Kontaktieren eines Leiters mit rundem Querschnitt, wobei jedoch die Gefahr besteht, dass die Kontaktbereiche zwischen den Krallen und dem Leiter den Anforderungen bei einer Belastung durch Blitzstoßströme nicht genügen. Dieser Nachteil tritt insbesondere dann auf, wenn es sich bei dem elektrischen Leiter um einen Beton-Bewehrungsstahl handelt, welcher durch die typische Oberflächenstrukturierung keine glatte, elektrisch optimierte Oberfläche aufweist.

Bei dem Schnapphalter für einen Leiterdraht nach DE 198 17 061 C1 bilden Gehäuseteile eine Aufnahme zum Einlegen eines Leiterdrahts. Weiterhin sind Federschenkel vorhanden, die in Richtung zur Aufnahme weisende Krallen bilden. Ein Gehäuseunterbereich ist mit einem elektrisch leitenden Anschlussmittel, z.B. einer Schraube, versehen. Zur Verbesserung der Stromtragfähigkeit vom Leiterdraht zum Anschlussmittel wird ein elektrisch leitendes Kontaktstück in Richtung zum Gehäuseunterbereich elastisch nachgiebig ausgebildet. Durch das zusätzliche Kontaktstück, das sich an den Leiterdraht anschmiegt und das an die zusätzlichen Verbindungsmittel angeschlossen ist, wird die Fähigkeit des Schnapphalters, auch größere Ströme vom Leiterdreht zum Anschlussmittel zu leiten, verbessert. Die Ausbildung eines Gehäuseteils mit eingesetztem zusätzlichem, elastisch nachgiebig gelagertem Kontaktstück ist jedoch technologisch aufwendig und führt zu höheren Kosten. Die Aufnahme für den Leiterdraht, welche eine quasi geschlossene Mulde bildet, kann beim Einsatz derartiger Schnapphalter zum Zweck der Kontaktierung von Bewehrungen verschmutzen mit der Folge einer erheblich verschlechterten elektrischen Kontaktierung und damit verbundenen Störfällen.

Aus verschiedenen Untersuchungen und praktischen Anwendungen bekannter Schnapphalter hat es sich gezeigt, dass der Anschluss von Band- bzw. Rundmaterialien in Bewehrungen aufgrund der beengten Platzverhältnisse problematisch ist. Vorhandene Klemmen mit Schraubkontaktierungen können zwar recht feste und gut leitende Kontakte bilden, jedoch erfordert der Einsatz einer oder mehrerer Schrauben und deren Betätigung zusätzlichen Montageaufwand. Die Montage ist weiterhin dadurch erschwert, dass gleichzeitig Erdungsleiter, Klemmen sowie Montagewerkzeug gehandhabt werden müssen. Bekannte Klemmen zum Aufschnappen hingegen sind entweder herstellungsseitig zu aufwendig oder nicht in der Lage, die im Belastungsfall auftretenden Stoßströme sicher zu führen.

Halterungen für elektrische Leiter sind darüber hinaus aus der US 2002/193018 A1, der WO 2012/007518 A1, der US 5 024 610 A oder der FR 2 337 443 A1 vorbekannt.

Aus dem Vorgenannten ist es daher Aufgabe der Erfindung, eine weiterentwickelte schraubenlose Klemmvorrichtung für Blitzschutz- oder Erdungsleiter mit gleicher oder unterschiedlicher Querschnittsfläche anzugeben, wobei die Klemmvorrichtung aus wenigen Teilen besteht und vorzugsweise als kostengünstiges Stanz-Biegeteil herstellbar ist. Im einfachsten Fall soll die Klemmvorrichtung aus lediglich zwei Teilen gefertigt sein, die z.B. einerseits einen Rundleiter und andererseits einen Flachleiter sicher kontaktieren und diese Leiter elektrisch verbinden können. Weiterhin ist es Aufgabe der Erfindung, die Klemmvorrichtung so auszugestalten, dass durch eine vielfältige Kombination von Klemmvorrichtungen, die sämtlich auf das Prinzip der Federklemmung zurückgreifen, unterschiedlichste Anwendungsfälle abdeckbar sind, ohne dass eine Vielzahl von Teilen vorrätig gehalten werden muss.

Die Lösung der Aufgabe der Erfindung erfolgt durch eine schraubenlose Klemmvorrichtung gemäß der Merkmalskombination des Anspruchs 1, wobei die Unteransprüche zweckmäßige Ausgestaltungen und Weiterbildungen umfassen.

Es wird demnach von einer schraubenlosen Klemmvorrichtung für elektrische Leiter ausgegangen. Hierbei kann es sich um Blitzschutz- oder Erdungsleiter mit gleicher oder unterschiedlicher Querschnittsfläche, z.B. einer kreisrunden Querschnittsfläche oder einer rechteckigen Querschnittsfläche, d.h. um einen Flachleiter handeln.

Die schraubenlose Klemmvorrichtung kann auch als unmittelbares Verbindungsteil im Bereich des Blitzschutzes und der Erdung bzw. Schirmung eingesetzt werden, indem selbiges dazu dient, z.B. Bewehrungsmatten untereinander zu kontaktieren, wobei auf einen zusätzlichen Verbindungsdraht oder ein zusätzliches Verbindungsband verzichtet werden kann.

Die schraubenlose Klemmvorrichtung besteht aus mindestens zwei gegenüberliegenden Federschenkeln aus einem elektrisch leitfähigen Material, wobei die gegenüberliegenden Federschenkel ein Federschenkelpaar bilden. Darüber hinaus weisen die Federschenkel eine Formgebung zum Aufnehmen und Kontaktieren eines Abschnitts des jeweiligen elektrischen Leiters auf. Darüber hinaus ist ein Verbindungsabschnitt zwischen den Federschenkeln vorgesehen.

Ein erstes Klemmenteil mit mindestens zwei Federschenkeln und ein zweites Klemmenteil mit mindestens zwei Federschenkeln sind vorgesehen, wobei die jeweiligen Verbindungsabschnitte zwischen den Federschenkeln bevorzugt Rücken an Rücken liegend verbindbar angeordnet sind.

Die Verbindung der Federschenkel bzw. Federschenkelpaare Rücken-an-Rücken kann kraft-, form- und/oder stoffschlüssig erfolgen.

Das erste und zweite Klemmenteil besteht bei einer Ausführungsform der Erfindung aus mindestens zwei beabstandeten, jeweils gegenüberliegenden Federschenkelpaaren, wobei der Verbindungsabschnitt sich ergänzend über den Abstandsraum zwischen den Federschenkelpaaren erstreckt. Dies bedeutet, dass zwei beabstandete Federschenkelpaare auf einer gemeinsamen Längsachse vorhanden sind, wobei sich der Verbindungsabschnitt über die Längsachse erstreckt.

Bei einer Ausführungsform der Erfindung ist die Formgebung der Federschenkel kreisbogenartig oder in Form eines angenäherten V ausgebildet.

An dem dem Verbindungsabschnitt gegenüberliegenden Ende der Federschenkel weisen diese eine Abwinklung oder eine Kröpfung auf, die einerseits stabilitätserhöhend wirkt und zum anderen das Aufschnappen auf einen Leiter verbessert.

Zwischen den beabstandeten Federschenkelpaaren ist im Bereich des jeweils freien Endes des jeweiligen Federschenkels ein Stabilisierungssteg ausgebildet. Dieser Stabilisierungssteg verbindet jeweils die benachbarten, auf einer Seite befindlichen Federschenkel. Hierdurch ist eine ausreichende Steifigkeit der Klemmvorrichtung und die notwendige Flächenpressung bezogen auf den eingebrachten elektrischen Leiter gewährleistet.

Der Abstand der Federschenkel der Schenkelpaare und die Formgebung zur Aufnahme des jeweiligen Leiters ist an den Querschnitt des einzusetzenden Leiters angepasst, wobei Rücken-an-Rücken-Klemmenteile mit gleichem Abstand der Federschenkel, aber auch unterschiedlichem Abstand dieser kombinierbar sind. Bei einer derartigen Rücken-an-Rücken-Montage kann z.B. ein Leiter mit kleinerem Querschnitt mit Hilfe der Klemmvorrichtung mit einem Leiter größeren Querschnitts sicher elektrisch verbunden und kontaktiert werden.

Durch die wählbare Lageposition bei der Rücken-an-Rücken-Anordnung der Klemmenteile können sowohl parallel zueinander verlaufende Leiter kontaktiert werden als auch solche Leiter, die unter einem Winkel zueinander verlaufen.

Bei elektrischen Leitern mit ovalem oder kreisförmigem Querschnitt, insbesondere auch solchen Leitern, die einem üblichen Bewehrungsstahl mit Oberflächenstrukturierung entsprechen, besitzen die Federschenkel jeweils eine Formgebung eines angenäherten V, wobei hierdurch an den Berührungspunkten bzw. Berührungsflächen Kontaktzonen mit hoher Flächenpressung entstehen, so dass die gewünschte Blitzstoßstromtragfähigkeit unter allen Umständen gegeben ist.

In Weiterbildung der Erfindung kann das erste und/oder zweite Klemmenteil gemäß der Ausführungsform der Erfindung nach dem Aufschnappen auf den jeweiligen elektrischen Leiter mit einer deckelartigen Abdeckung komplettiert werden.

Die Abdeckung ist dabei so ausgebildet, dass diese die freien Enden der Federschenkelpaare umgreift.

In Weiterbildung besitzt die Abdeckung zwei gegenüberliegende Schenkel, welche in den Abstandsraum zwischen den Federschenkelpaaren eintauchen und mit einem Schenkelabschnitt den eingebrachten Leiter umgreifen.

Die Erfindung besteht darüber hinaus in der Verwendung einer schraubenlosen Klemmvorrichtung mit den Merkmalen gemäß den vorstehend erläuterten Ausführungsformen der Erfindung zur Kontaktierung von Band- und/oder Rundbewehrungsmaterialien im Bereich des Blitzschutzes oder Erdung, wobei die Band- oder Rundbewehrungsmaterialien in Beton oder dergleichen Materialien vergossen werden.

Die Erfindung soll nachstehend anhand von Ausführungsbeispielen sowie unter Zuhilfenahme von Figuren näher erläutert werden.

Hierbei zeigen:
- Fig. 1a und 1b: verschiedene erfindungsgemäße perspektivische Ansichten eines Klemmenteils mit zwei auf einer Längsachse liegenden Federschenkelpaaren, wobei jedes Federschenkelpaar aus zwei Federschenkeln besteht und wobei ein Stabilisierungssteg zwischen den beabstanderten Federschenkelpaaren im Bereich des jeweils freien Endes des jeweiligen Federschenkels vorgesehen ist;
- Fig. 2a und 2b: verschiedene nicht erfindungsgemäße perspektivische Ansichten der zweiten Ausführungsform der Klemmvorrichtung mit einem Klemmenteil, welches aus zwei, in einer Ebene liegenden beabstandeten Federschenkeln besteht, wobei in den Abstandsraum eine Federzunge eintaucht und die Federzunge und die Federschenkel in einen gemeinsamen Verbindungsabschnitt übergehen, welcher als Abwinklung ausgebildet ist, so dass über die Abwinklung eine Rücken-an-Rücken-Montage bzw. Verbindung mehrerer derartiger Klemmenteile oder mit einem Klemmenteil gemäß den Fig. 1a und 1b erfolgen kann;
- Fig. 3a und 3b: Darstellungen einer Rücken-an-Rücken-Montage von zwei, nicht erfindungsgemäßen Klemmenteilen gemäß den Fig. 2a und 2b ohne (Fig. 3a) und mit (Fig. 3b) aufgenommenen Flachleitern;
- Fig. 4a und 4b: die Darstellung einer Rücken-an-Rücken-Montage eines Klemmenteils mit Federschenkelpaaren und eines nicht erfindungsgemäßen Klemmenteils mit beabstandeten Federschenkeln und Federzunge, gegeneinander um 90° verdreht, zur Aufnahme sowohl eines Flachleiters als auch eines Rundleiters gemäß Fig. 4b;
- Fig. 4c und 4d: eine Darstellung ähnlich derjenigen nach Fig. 4a, jedoch mit paralleler Anordnung der Klemmenteile zur Aufnahme parallel verlaufender Rundleiter und Flachleiter (Fig. 4d);
- Fig. 5a und 5b: Darstellungen der Kombination und Rücken-an-Rücken-Montage von jeweils zwei erfindungsgemäßen Klemmenteilen mit Federschenkelpaaren und unterschiedlichen Ausformungen zur Aufnahme von Rundleitern unterschiedlicher Querschnitte, wie dies in Fig. 5b dargestellt ist;
- Fig. 6a und 6b: eine Darstellung einer Rücken-an-Rücken-Ausbildung von erfindungsgemäßen Klemmenteilen mit Ausformungen in den Federschenkelpaaren zur Aufnahme parallel verlaufender Rundleiter mit gleichem Querschnitt, wie dies in der Fig. 6b gezeigt ist, und
- Fig. 7: eine perspektivische Darstellung eines erfindungsgemäßen Klemmenteils mit Federschenkelpaaren und aufgenommenem Rundleiter sowie einer deckelartigen Abdeckung zur Sicherung der Arretierung des Rundleiters im Klemmenteil.

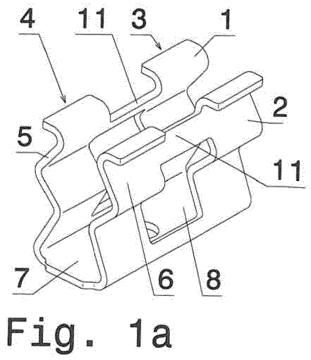

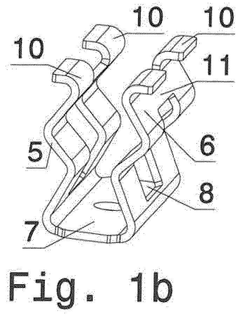

Bei der Darstellung der Ausführungsform der Erfindung gemäß den Fig. 1a und 1b ist ein erstes Klemmenteil mit zwei Federschenkeln 1; 2 gezeigt, wobei die Federschenkel 1; 2 ein erstes Federschenkelpaar 3 bilden.

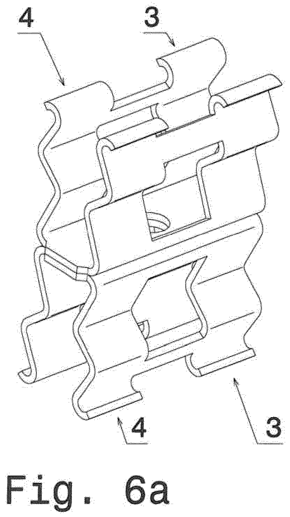

Ein zweites Federschenkelpaar 4 geht von den zu den Federschenkeln 1; 2 beabstandeten Federschenkeln 5; 6 aus. Zwischen den Federschenkeln 1; 2 und den Federschenkeln 5; 6 sind Verbindungsabschnitte 7 bzw. 8 vorhanden. Zwei wie in den Fig. 1a und 1b ausgebildete Klemmenteile können, wie in der Fig. 6a gezeigt, Rücken-an-Rücken verbunden werden, wobei diesbezüglich die Verbindungsabschnitte 7; 8 genutzt werden.

Die Verbindungsabschnitte 7; 8 erstrecken sich in einem mittleren Bereich, wie in der Darstellung nach den Fig. 1a und 1b ersichtlich, auch über den Abstandsraum zwischen den Federschenkelpaaren 3; 4, so dass eine stabile Klemmenteilausbildung erhalten wird.

Die Formgebung der Federschenkel 5; 6 und 1; 2 ist, wie in der Fig. 1a und 1b gezeigt, an einen Rundleiter angepasst und weist die Gestalt eines V auf, was insbesondere bei der stirnseitigen Perspektivdarstellung nach Fig. 1b erkennbar ist.

An den dem Verbindungsabschnitt 7; 8 gegenüberliegenden Enden sind die Federschenkel jeweils mit einer Abwinklung in Form einer Biegung oder Kröpfung 10 versehen.

Zwischen den beabstandeten Federschenkelpaaren 3; 4 ist im Bereich des jeweils freien Endes des jeweiligen Federschenkels 1; 2 bzw. 5; 6 ein Stabilisierungssteg 11 ausgebildet.

Die Stabilisierungsstege 11 verbinden jeweils die benachbarten, auf einer Seite befindlichen Federschenkel 1; 5 bzw. 2; 6.

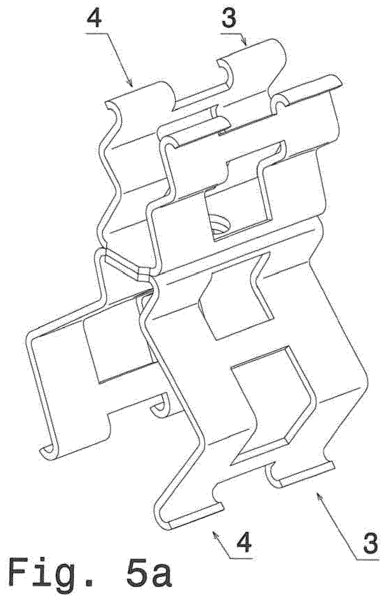

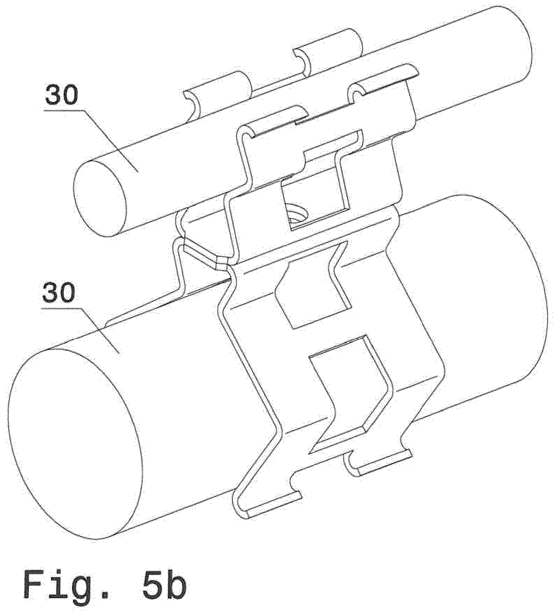

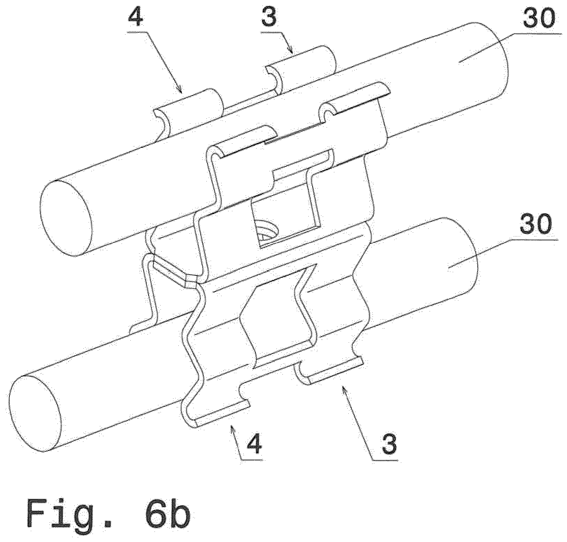

Der Abstand der Federschenkel 1; 2 bzw. 5; 6 der Schenkelpaare 3; 4 und die Formgebung zur Aufnahme des jeweiligen Leiters ist an den Querschnitt des entsprechenden Leiters angepasst. Es können Rücken-an-Rücken-Klemmenteile mit gleichem Abstand der Federschenkel, aber auch mit unterschiedlichem Abstand dieser kombiniert werden, wie dies in den Fig. 5a, 5b bzw. 6a und 6b dargestellt ist.

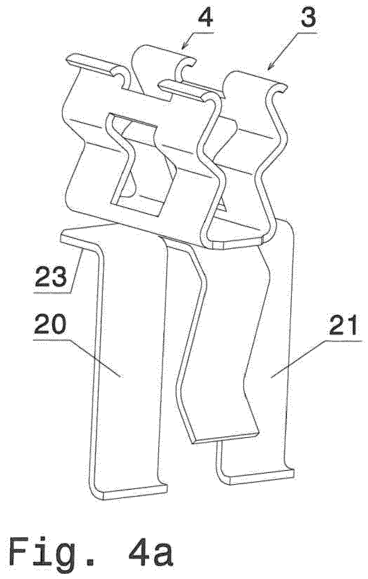

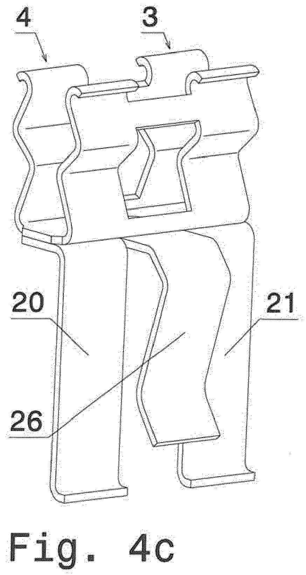

Die Rücken-an-Rücken-Verbindung kann stoffschlüssig, formschlüssig, aber auch kraftschlüssig erfolgen, wobei die Lageposition der Klemmenteile, wie in den Fig. 4a bis 4d gezeigt, zueinander beliebig gewählt werden kann.

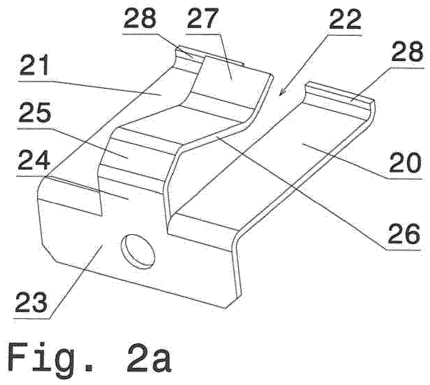

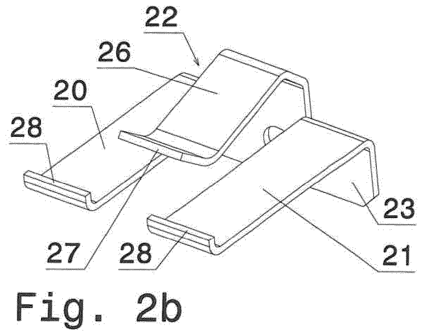

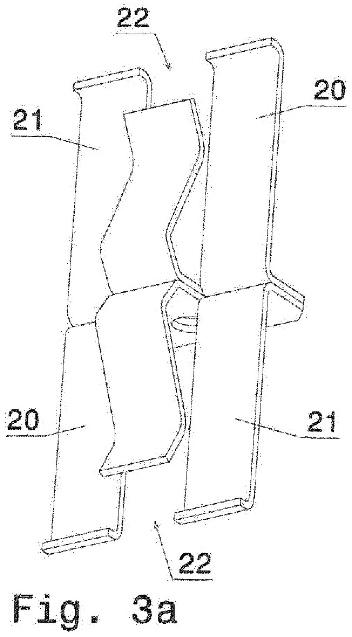

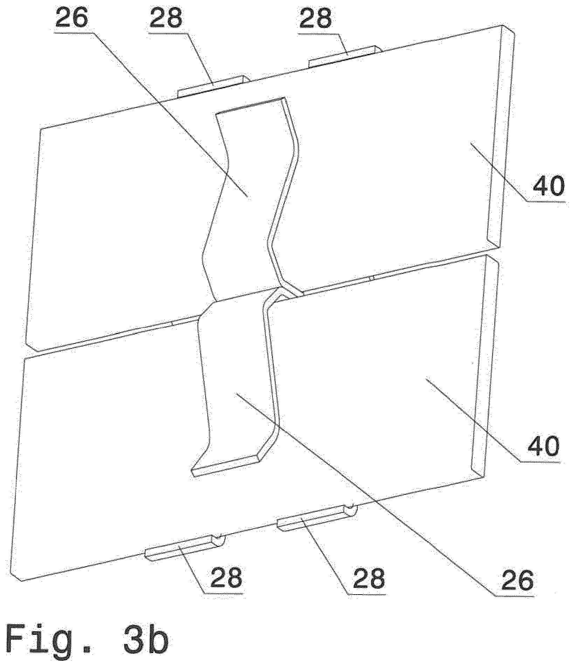

Bei der nicht erfindungsgemäßen Ausführungsform eines Klemmenteils, wie in den Fig. 2a und 2b in verschiedenen Ansichten gezeigt, besteht dieses aus mindestens zwei in einer Ebene liegenden beabstandeten Federschenkeln 20; 21, wobei in den Abstandsraum zwischen den Federschenkeln 20; 21 eine Federzunge 22 eintaucht, wobei die Federzunge 22 und die Federschenkel 20; 21 in einen gemeinsamen Verbindungsabschnitt 23 übergehen, welcher als Abwinklung ausgebildet ist. Über diese Abwinklung kann eine Rücken-an-Rücken-Verbindung von Klemmenteilen entweder der Ausführungsformen nach den Fig. 2a und 2b miteinander oder aber auch eine Kombination von jeweils einem Klemmenteil z.B. nach der Fig. 1a mit einem solchen Klemmenteil nach der Fig. 2b vorgenommen werden. Diese entsprechenden Kombinationsmöglichkeiten sind in den Fig. 3a und 3b sowie Fig. 4a bis 4d illustriert.

Die Federzunge 22 der Ausführung des Klemmenteils nach den Fig. 2a und 2b erstreckt sich über einen ersten Längenabschnitt 24 in der Ebene der Abwinklung 23, über einen zweiten Längenabschnitt 25 in Richtung des freien Endes der Federschenkel 20; 21 und über einen dritten Längenabschnitt 26 in Richtung der Ebene der Federschenkel 20; 21.

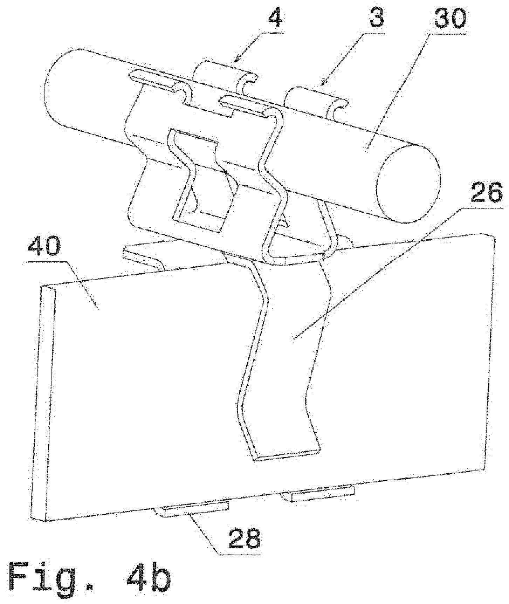

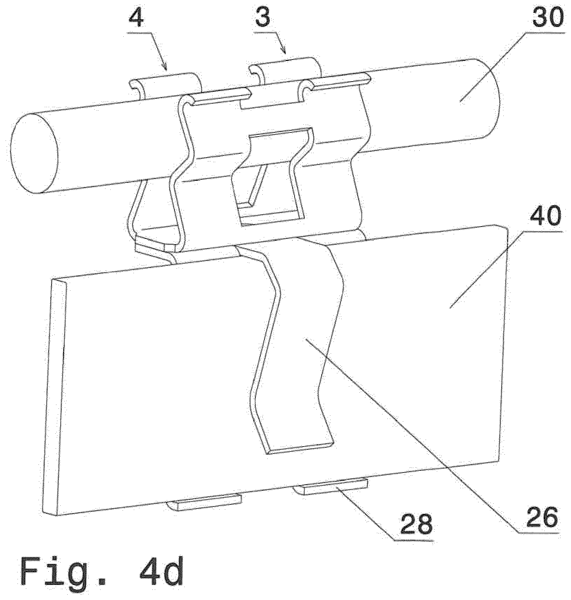

Zwischen Federzunge 22 und den Federschenkeln 20; 21 kann ein Flachleiter klemmend eingeführt und gehalten werden, wie dies die Fig. 3b, 4b und 4d beispielhaft zeigen.

Der dritte Längenabschnitt 26 geht bei den Darstellungen nach den Fig. 2a und 2b in eine Einführschräge 27 für den Flachleiter über.

Die freien Enden der Federschenkel 20; 21 besitzen noch eine Kröpfung oder Abwinklung 28, um einen aufgenommenen Leiter teilweise zu umgreifen und zu fixieren. Dies wird aus den Darstellungen insbesondere nach den Fig. 3b, 4b und 4d erkennbar.

Die Breite der Federschenkel 20; 21 kann jeweils gleich oder größer als die Breite der Federzunge 22 gewählt werden. Bevorzugt ist die jeweilige Breite der Federschenkel 20; 21 größer als die Breite der Federzunge 22. Mithin kann die Federzunge 22 durch die Wahl ihrer Breite und im Übrigen durch die Auslegung der Dicke des entsprechenden Materials hinsichtlich der gewünschten Federeigenschaften und der Aufbiegbarkeit der Zunge optimiert werden, wobei hingegen die Federschenkel 20; 21 weniger nachgiebig realisiert werden können und über eine möglichst große Kontaktfläche bezogen auf den elektrischen Leiter verfügen (siehe hierzu die Darstellungen nach den Fig. 3b, 4b und 4d).

Wie bereits angedeutet, können die Klemmenteile gemäß der Grundkonfiguration nach den Fig. 1a; 1b und 2a; 2b untereinander, aber auch miteinander kombiniert werden, so dass sich die Anwendungsmöglichkeiten gemäß den Darstellungen nach den Fig. 3a bis 6b ergeben.

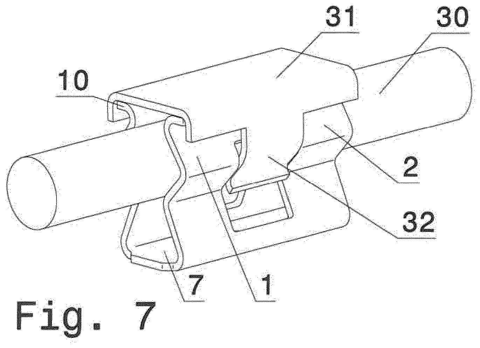

Wie in der Fig. 7 dargestellt, kann ein Klemmenteil gemäß den Darstellungen nach Fig. 1a und 1b nach dem Aufschnappen des jeweiligen elektrischen Leiters 30, in Fig. 7 ausgebildet als Rundleiter, noch mit einer deckelartigen Abdeckung 31 komplettiert werden.

Die Abdeckung 31 umgreift diesbezüglich die freien Enden der Federschenkelpaare 3; 4, und zwar insbesondere im Bereich der Abwinklungen oder Kröpfungen 10.

Die Abdeckung 31 weist bei einer Ausbildung zwei gegenüberliegende Schenkel 32 auf, welche in den Abstandsraum zwischen den Federschenkelpaaren 3; 4 eintauchen und mit einem Schenkelabschnitt den eingebrachten Leiter 30 mindestens teilweise umgreifen.

## Patentansprüche

1. Schraubenlose Klemmvorrichtung für Blitzschutz- oder Erdungsleiter mit gleicher oder unterschiedlicher Querschnittsfläche, bestehend aus einem ersten und einem zweiten Klemmenteil, die jeweils mindestens zwei gegenüberliegende Federschenkel (1; 2, 5; 6) aus elektrisch leitfähigem Material aufweisen, die ein Federschenkelpaar (3; 4) bilden und welche eine Formgebung zum Aufnehmen und Kontaktieren eines Abschnitts eines jeweiligen elektrischen Leiters (30; 40) der Blitzschutz- oder Erdungsleiter besitzen, sowie mit einem Verbindungsabschnitt (7; 8) zwischen den Federschenkeln (5; 6 bzw. 1; 2),
**dadurch gekennzeichnet, dass**
die jeweiligen Verbindungsabschnitte (7; 8) zwischen den Federschenkeln (1; 2; 5; 6) Rücken an Rücken liegend verbindbar angeordnet sind.

2. Schraubenlose Klemmvorrichtung nach Anspruch 1,
**dadurch gekennzeichnet, dass**
das erste und/oder zweite Klemmenteil aus mindestens zwei beabstandeten, jeweils gegenüberliegenden Federschenkelpaaren (3; 4) besteht, wobei der Verbindungsabschnitt (7; 8) sich ergänzend über den Abstandsraum zwischen den Federschenkelpaaren (3; 4) erstreckt.

3. Schraubenlose Klemmvorrichtung nach Anspruch 2,
**dadurch gekennzeichnet, dass**
die Formgebung der Federschenkel (1; 2, 5; 6) kreisbogenartig oder als angenähertes V ausgebildet ist.

4. Schraubenlose Klemmvorrichtung nach einem der vorangegangenen Ansprüche,
**dadurch gekennzeichnet, dass**
an dem dem Verbindungsabschnitt (7; 8) gegenüberliegenden Ende die Federschenkel (1; 2, 5; 6) eine Abwinklung oder Kröpfung (10) aufweisen.

5. Schraubenlose Klemmvorrichtung nach Anspruch 2,
**dadurch gekennzeichnet, dass**
zwischen den beanstandeten Federschenkelpaaren (3; 4) im Bereich des jeweils freien Endes des jeweiligen Federschenkels (1; 5, 2; 6) ein Stabilisierungssteg (11) vorgesehen ist, welcher jeweils die benachbarten, auf einer Seite befindlichen Federschenkel (1; 5, 2; 6) verbindet.

6. Schraubenlose Klemmvorrichtung nach einem der vorangegangenen Ansprüche,
**dadurch gekennzeichnet, dass**
die Rücken-an-Rücken-Verbindung stoffschlüssig, formschlüssig oder kraftschlüssig erfolgt, wobei die Lageposition der Klemmenteile zueinander wählbar ist.

7. Schraubenlose Klemmvorrichtung nach einem der Ansprüche 1 bis 6,
**dadurch gekennzeichnet, dass**
das erste und/oder zweite Klemmenteil nach dem Aufschnappen auf den jeweiligen elektrischen Leiter (30) mit einer deckelartigen Abdeckung (31) komplettierbar ist.

8. Schraubenlose Klemmvorrichtung nach Anspruch 2,
**dadurch gekennzeichnet, dass**
die Abdeckung (31) die freien Enden der Federschenkelpaare (3; 4) umgreift.

9. Schraubenlose Klemmvorrichtung nach Anspruch 8,
**dadurch gekennzeichnet, dass**
die Abdeckung (31) zwei gegenüberliegende Schenkel (32) besitzt, welche in den Abstandsraum zwischen den Federschenkelpaaren (3; 4) eintauchen und mit einem Schenkelabschnitt den eingebrachten Leiter (30) umgreifen.

## Claims

1. Screw-free clamping device for lighting protection conductors or earthing conductors of the same or different cross sectional areas, consisting of a first and a second clamp part, which each have at least two opposing spring limbs (1; 2, 5; 6) of electrically conductive material, which form a spring limb pair (3; 4) and which have a shaping for receiving and contacting a portion of an associated electrical conductor (30; 40) of the lightning protection line or earthing conductor, and comprising a connecting portion (7; 8) between the spring limbs (5; 6 and 1; 2),
**characterised in that**
the respective connecting portions (7; 8) are arranged connectably, positioned back to back between the spring limbs (1; 2; 5; 6).

2. Screw-free clamping device according to claim 1,
**characterised in that**
the first and/or second clamp part consist of at least two spaced-apart spring limb pairs (3; 4) opposing one another in each case, the connecting portion (7; 8) additionally extending across the spacing gap between the spring limb pairs (3; 4).

3. Screw-free clamping device according to claim 2,
**characterised in that**
the spacing of the spring limbs (1; 2, 5; 6) is formed in the manner of an arc or as an approximated V.

4. Screw-free clamping device according to any of the preceding claims,
**characterised in that**
the spring limbs (1; 2, 5; 6) have an elbow or offset (10) on the end opposite the connecting portion (7; 8).

5. Screw-free clamping device according to claim 2,
**characterised in that**
a stabilising web (11) is provided between the spaced-apart spring limb pairs (3; 4) in the region of the free end of each spring limb (1; 5, 2; 6), and connects the adjacent spring limbs (1; 5, 2; 6) located on one side.

6. Screw-free clamping device according to any of the preceding claims,
**characterised in that**
the back-to-back connection is provided adhesively, positively or non-positively, it being possible to select the positioning of the clamp parts with respect to one another.

7. Screw-free clamping device according to any of claims 1 to 6,
**characterised in that**
the first and/or second clamp part can be completed with a cap-like cover (31) after the snapping onto the associated electrical conductor (30).

8. Screw-free clamping device according to claim 2,
**characterised in that**
the cover (31) engages around the free ends of the spring limb pairs (3; 4) .

9. Screw-free clamping device according to claim 8,
**characterised in that**
the cover (31) has two opposing limbs (32), which dip into the spacing gap between the spring limb pairs (3; 4) and of which a limb portion engages around the introduced conductor (30) .

## Revendications

1. Dispositif de serrage sans vis pour des conducteurs de protection contre la foudre ou de mise à la terre ayant des surfaces de section transversale identiques ou différentes, comprenant une première et une deuxième partie de serrage qui présentent chacune au moins deux branches de ressort opposées (1 ; 2, 5 ; 6) en matériau électriquement conducteur, qui forment une paire de branches de ressort (3 ; 4) et possèdent une forme destinée à recevoir et à établir le contact avec une section d'un conducteur électrique respectif (30 ; 40) des conducteurs de protection contre la foudre ou de mise à la terre, ainsi que comportant une section de liaison (7 ; 8) entre les branches de ressort (5 ; 6 respectivement 1 ; 2),
**caractérisé en ce**
**que** les sections de liaison respectives (7 ; 8) entre les branches de ressort (1 ; 2 ; 5 ; 6) sont disposées de manière à pouvoir être reliées dos à dos.

2. Dispositif de serrage sans vis selon la revendication 1,
**caractérisé en ce**
**que** la première et/ou la deuxième partie de serrage comprend au moins deux paires de branches de ressort (3 ; 4) espacées, chaque fois opposées, la section de liaison (7 ; 8) s'étendant de manière complémentaire sur l'espace d'écartement entre les paires de branches de ressort (3 ; 4) .

3. Dispositif de serrage sans vis selon la revendication 2,
**caractérisé en ce**
**que** les branches de ressort (1 ; 2, 5 ; 6) sont en forme d'arc de cercle ou de V approximatif.

4. Dispositif de serrage sans vis selon l'une des revendications précédentes,
**caractérisé en ce**
**qu'**à l'extrémité opposée à la section de liaison (7 ; 8), les branches de ressort (1 ; 2, 5 ; 6) présentent un pliage ou un coudage (10).

5. Dispositif de serrage sans vis selon la revendication 2,
**caractérisé en ce**
**qu'**une lamelle de stabilisation (11) est prévue entre les paires de branches de ressort (3 ; 4) dans la zone de l'extrémité libre respective de la branche de ressort respective (1 ; 5, 2 ; 6), laquelle lamelle de stabilisation (11) relie chaque fois les branches de ressort adjacentes (1 ; 5, 2 ; 6) situées sur un côté.

6. Dispositif de serrage sans vis selon l'une des revendications précédentes,
**caractérisé en ce**
**que** la liaison dos à dos est réalisée par coopération de matières, par complémentarité de formes ou par conjugaison de forces, la position des parties de serrage l'une par rapport à l'autre pouvant être choisie.

7. Dispositif de serrage sans vis selon l'une des revendications 1 à 6,
**caractérisé en ce**
**que** la première et/ou la deuxième partie de serrage peuvent être complétées par un recouvrement (31) de type couvercle après encliquetage sur le conducteur électrique respectif (30) .

8. Dispositif de serrage sans vis selon la revendication 2,
**caractérisé en ce**
**que** le recouvrement (31) s'engage autour des extrémités libres des paires de branches de ressort (3 ; 4).

9. Dispositif de serrage sans vis selon la revendication 8,
**caractérisé en ce**
**que** le recouvrement (31) possède deux branches opposées (32) qui pénètrent dans l'espace d'écartement entre les paires de branches de ressort (3 ; 4) et s'engagent avec une section de branche autour du conducteur inséré (30).
